# EUROPEAN PATENT APPLICATION

(11) **EP 4 524 651 A1**
(43) Date of publication of application: **19.03.2025**
(21) Application number: 23827285.0
(22) Date of filing: 23.06.2023
(51) Int. Cl.: G03B 17/56, B08B 5/02, G03B 15/00, H04N 23/52

(54) **HOUSING UNIT AND CAMERA UNIT**

(30) Priority: 24.06.2022 JP 2022101613
(71) Applicant: KOWA COMPANY, LTD., Naka-ku Nagoya-shi Aichi 460-8625 (JP)
(72) Inventor: FUKUSHIMA, Masayuki, Nagoya-shi Aichi 460-0003 (JP); OGUCHI, Yasunari, Nagoya-shi Aichi 460-0003 (JP); USHIYAMA, Takao, Nagoya-shi Aichi 460-0003 (JP)
(74) Representative: Kronthaler, Schmidt & Coll.
(86) International application number: PCT/JP2023/023254
(87) International publication number: WO 2023/249103

(57) **Abstract**

A housing unit 3 of the present invention includes a hollow housing 31 and a rotary window 4 disposed at an opening of the housing 31. The rotary window 4 has a window 41 having light transmissivity, a window frame 42 that supports the window 41 at its peripheral edge portion, and a driven means 54 provided on the outer periphery of the window frame 42. The housing unit 3 is provided with a driving means 5 that drives the driven means 54 to rotate the window frame 42, thereby rotating the rotary window 4, and a jetting means 6 that jets a fluid toward the outer surface of the window 41. With this housing unit or a camera unit provided with the housing unit, it is possible to sufficiently remove water spray, oil stains, etc. adhering to the rotary window in a usage environment.

## Description

### Technical Field

The present invention relates to a housing unit to be attached to a camera and relates also to a camera unit including the housing unit.

### Background Art

There has heretofore been a rotary window that is provided in front of a camera lens to protect the lens from rainfall, snowfall, and dirt under the usage environment while ensuring a field of view. The central portion of a rotary window is generally provided with a motor and a support arm that supports the motor to rotate the window, and therefore there is a problem in that these structures may shade the camera or create blind spots. In this context, a modified rotary window is known that has a structure in which a bearing is disposed on the outer peripheral portion of the rotary window and the rotary window is rotated at high speed via a gear of the rotary window from a gear of the motor of a fixed window (see Patent Document 1).

### Prior Art Documents

### Patent Documents

Patent Document 1:JP2013-049415A

### Summary of the Invention

### Problems to be solved by the Invention

However, in environments in which large amounts of water, coolant, oil, etc. are scattered around, such as inside machine tool rooms where coolant is scattered around, inside rooms for semiconductor wafer manufacturing processes, and food factories, simply rotating at high speed like the above rotary window may not be enough to remove the adhering water, oil, etc. In this case, there is a risk that the problem will occur in that the necessary images cannot be acquired by the camera due to water spray, oil stains, etc. adhering to the rotary window attached to the camera.

The present invention has been made in view of such points, and objects of the present invention include providing a housing unit that can sufficiently remove water spray, oil stains, etc. adhering to the rotary window under the usage environment and also providing a camera unit including the housing unit.

### Means for solving the Problems

To achieve the above objects, the present invention provides a housing unit comprising: a hollow housing; and a rotary window disposed at an opening of the housing, the rotary window comprising: a window having light transmissivity; a window frame that supports the window at its peripheral edge portion; and a driven means provided on an outer periphery of the window frame, the housing unit further comprising: a driving means that drives the driven means to rotate the window frame, thereby rotating the rotary window; and a jetting means that jets a fluid toward an outer surface of the window (Invention 1). Not only does the rotary window rotate, but also the jetting means jets a fluid toward the outer surface of the window, and it is thereby possible to sufficiently remove water spray, oil stains, etc. adhering to the rotary window.

In the above invention (Invention 1), the housing unit may further comprise a supplying means that supplies a gas into the housing, and the jetting means may be configured to jet the gas supplied by the supplying means toward the outer surface of the window (Invention 2). By utilizing the gas supplied from the supplying means, there is no need to separately supply the gas to the jetting means, and costs can be suppressed.

In the above invention (Invention 1), the jetting means may jet the fluid toward a center's vicinity of the outer surface of the rotary window (Invention 3). By jetting the fluid to this position, water droplets and the like that remain in the center's vicinity and cannot be completely removed can be more effectively removed.

In the above invention (Invention 1), the driving means may comprise a motor and a motor-side gear provided on a rotating shaft of the motor, the driven means may comprise a frame-side gear provided around the outer periphery of the window frame of the rotary window, and the frame-side gear may be rotated by rotating the motor-side gear with driving force of the motor (Invention 4).

In the above invention (Invention 1), the driving means may comprise a motor and a motor-side pulley and a belt provided on a rotating shaft of the motor, the driven means may comprise a frame-side pulley provided around the outer periphery of the window frame of the rotary window, and the frame-side pulley may be rotated by rotating the motor-side pulley and the belt with driving force of the motor (Invention 5).

In the above invention (Invention 1), the driving means may comprise a supplying means that supplies a gas into the housing, and the driven means may comprise a fin provided on the outer periphery of the window frame so as to face a feeding direction of the gas (Invention 6). With such a configuration, it is possible to rotate the rotary window without using a motor.

In the above invention (Invention 1), the housing unit may further comprise a supplying means that supplies a gas into the housing, the window frame may have a labyrinth structure at an engagement portion with the housing, and the gas discharged from the labyrinth structure may be discharged in an opposite direction to the window (Invention 7). By having the labyrinth structure at the engagement portion, it is possible to prevent water and the like from entering the housing. Moreover, by discharging the gas from the labyrinth structure in the opposite direction to the window, it is possible to prevent water and oil scattered in the usage environment from being stirred up and sent to the window side.

In the above invention (Invention 1), the rotary window may be provided with a wiper (Invention 8).

In the above invention (Invention 1), a mesh portion that covers the rotary window may be provided (Invention 9).

In the above invention (Invention 1), the jetting means may be configured to jet the same liquid as that contained in the air in a usage environment (Invention 10). By jetting the same liquid as that contained in the air in the usage environment, water droplets, oil droplets, etc. adhering to the rotary window can be more preferably removed.

In the above invention (Invention 1), the housing may include a wall portion provided around the outer periphery of the rotary window, a space defined by the wall portion and the rotary window may be formed in front of the window, and a positive pressure generating means may be provided so as to make the space a positive pressure (Invention 11). By providing the positive pressure generating means so as to make the space a positive pressure, it is possible to prevent small water droplets, oil droplets, etc. from adhering to the window.

In the above invention (Invention 11), the positive pressure generating means may be the jetting means (Invention 12). By the positive pressure generating means being the jetting means, the positive pressure generating means can more preferably remove water droplets, oil droplets, etc. adhering to the rotary window while preventing small water droplets, oil droplets, etc. from adhering to the window.

In the above invention (Invention 11), the housing unit may further comprise a supplying means that supplies a gas into the housing, the window frame may have a labyrinth structure at an engagement portion with the housing, and the positive pressure generating means may be configured such that the gas discharged from the labyrinth structure is discharged into the space (Invention 13).

The present invention also provides a camera unit comprising: a hollow housing; a rotary window disposed at an opening of the housing; and a camera disposed at a central portion in the housing so that a lens of the camera faces the rotary window, the rotary window comprising: a window having transmissivity; a window frame that supports the window at its peripheral edge portion; and a driven means provided on an outer periphery of the window frame, the camera unit further comprising: a driving means that drives the driven means to rotate the window frame, thereby rotating the rotary window; and a jetting means that jets a fluid toward an outer surface of the window (Invention 14). Not only does the rotary window rotate, but also the jetting means jets a fluid toward the outer surface of the window, and it is thereby possible to sufficiently remove water spray, oil stains, etc. adhering to the rotary window and maintain the field of view of the camera clear.

In the above invention (Invention 14), the housing may cover only a part of the camera (Invention 15). By covering only a part of the camera, the entire configuration can be made compact.

### Advantageous Effect of the Invention

The housing unit of the present invention and the camera unit including the housing unit have the rotary window and the jetting means and can thereby sufficiently remove water spray, oil stains, etc. adhering to the rotary window under the usage environment.

### Brief Description of Drawings

FIG. 1 is a front view of a camera unit according to a first embodiment of the present invention.
FIG. 2 is a cross-sectional view of the camera unit taken along line A-A of FIG. 1.
FIG. 3 is a partially enlarged cross-sectional view of the camera unit according to the first embodiment of the present invention.
FIG. 4 is a cross-sectional view of a camera unit according to a second embodiment of the present invention.
FIG. 5 is a cross-sectional view of a camera unit according to a third embodiment of the present invention.

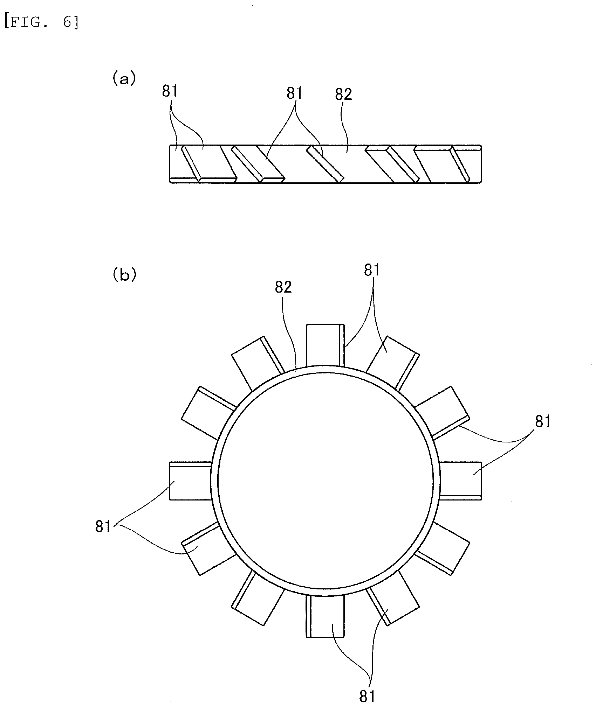

FIG. 6 is a diagram for explaining a fin portion in the camera unit according to the third embodiment of the present invention.
FIG. 7 is a cross-sectional view of a camera unit according to a fourth embodiment of the present invention.
FIG. 8 is a cross-sectional view of a camera unit according to a modified example of the fourth embodiment of the present invention.

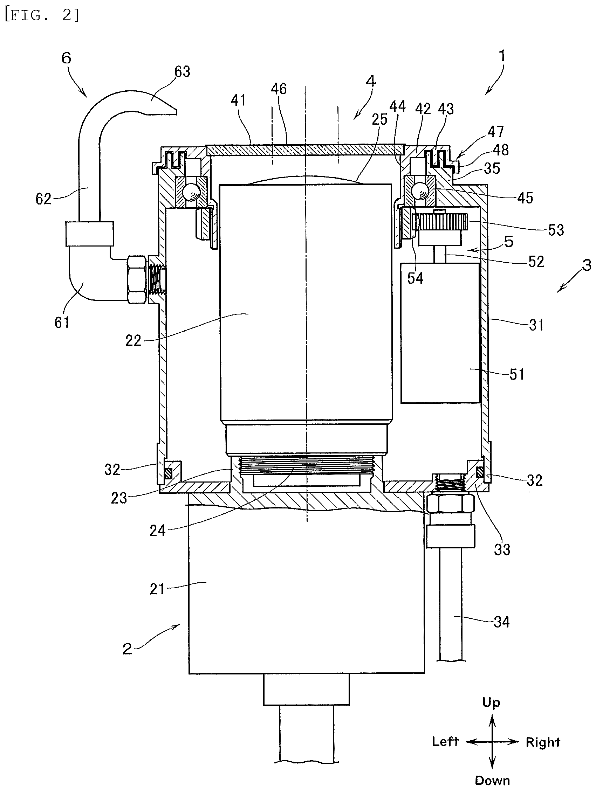

Embodiments for Carrying out the Invention Hereinafter, embodiments of the camera unit of the present invention will be described with reference to the drawings. In the present embodiments, when the same components are described by distinguishing them according to their positions, they will be distinguished by adding alphabets. In FIG. 2, up, down, right, and left directions are indicated for easy understanding of the description, but these directions do not mean those in an actual usage state.

### (First Embodiment)

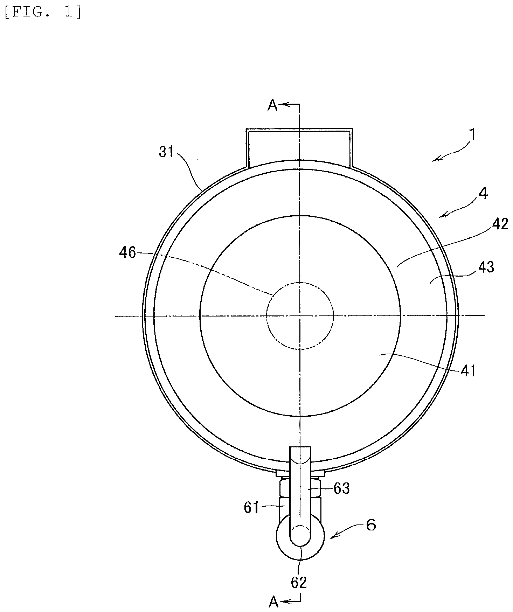

A camera unit 1 of the present embodiment illustrated in FIGS. 1 to 3 has a camera 2 and a housing unit 3. The camera 2 includes a camera main body 21 and a lens member 22 provided on the camera main body 21. The camera main body 21 has a fitting portion 23 that protrudes from the camera main body 21 to the upper side in FIG. 2. The lens member 22 has a lower end portion 24 located on the lower side of the lens member 22 in FIG. 2. The camera main body 21 and the lens member 22 are fixed together by screwing the lower end portion 24 of the lens member 22 inside the fitting portion 23 of the camera main body 21 and are detachable from each other. The camera main body 21 is waterproof (and/or oil-proof). In addition, among a plurality of lens elements (not illustrated) arranged in the lens barrel, a lens element 25 located in the lead is fixed to the opposite side of the lower end portion 24 of the lens member 22.

The housing unit 3 has a hollow, approximately cylindrical housing 31, and the lens member 22 is disposed inside the housing 31. A lower end portion 32 forming an opening on the lower side of the housing 31 in FIG. 2 is provided with a bottom portion 33 that closes the opening. The fitting portion 23 of the camera main body 21 is fixed to the center of the bottom portion 33 in a state of being inserted inside the housing 31. A supplying means 34 that supplies a gas (air) to the inside of the housing 31 is provided at the outer periphery of the camera main body 21 at the bottom portion 33. By supplying air to the inside of the housing 31 using the supplying means 34, the inside of the housing 31 becomes a positive pressure, and it is possible to prevent liquid from entering the housing 31 under the usage environment.

An upper end portion 35 forming an opening on the upper side of the housing 31 in FIG. 2 is provided with a rotary window 4. The rotary window 4 includes a window 41 having transparency and a window frame 42 that holds the window 41. In a front view, the window 41 is circular, and the window frame 42 is annular. The peripheral edge portion of the window 41 is fixed to the window frame 42, and a circumferential end portion 43 of the window frame 42 engages with the upper end portion 35 of the housing 31. The window 41 and the lens element 25 of the lens member 22 face each other, and the camera 2 can capture images through the window 41 without the field of view being shaded by any components. The window frame 42 includes a cylindrical extended portion 44 that extends downward from the window 41 in FIG. 2. A bearing 45 is provided on the outer periphery of the extended portion 44, and the window frame 42 is fitted to the inner peripheral surface of the housing 31 via the bearing 45. When fitting the window frame 42 to the inner peripheral surface of the housing 31, other than the rolling bearing of the bearing 45, an air bearing, an oil-lubricated bearing, a magnetic bearing, or the like may be used.

The camera unit 1 further includes a driving means 5 for the rotary window 4. In the present embodiment, the driving means 5 has a motor 51 and a motor-side gear 53 provided on a rotating shaft 52 of the motor 51. The rotary window 4, which rotates by receiving the driving force of the motor-side gear 53, is provided with a frame-side gear 54 (driven means) that is fitted to the motor-side gear 53. The frame-side gear 54 is provided on the outer periphery of the extended portion 44 on the lower side than the bearing 45. The rotation speed of the rotary window 4 driven by the power of the motor 51 is, for example, 3000 rpm. The wiring for controlling the motor 51 is omitted.

In the camera unit 1 thus configured, when the motor 51 is driven, the rotation of the motor-side gear 53 is transmitted to the frame-side gear 54 by the rotation of the rotating shaft 52, thereby rotating the rotary window 4. When the rotary window 4 rotates, water droplets, oil droplets, dirt, etc. adhering to the outer surface of the window 41 are blown away, and the transparency of the outer surface of the window 41 can be well maintained. It is considered, however, that since centrifugal force is not available in a rotational center's vicinity 46 of the window 41, water droplets, oil droplets, and dirt adhering to the window 41 cannot be blown away by the rotation depending on the usage environment or the like, such as where water droplets, oil droplets, etc. exist in a mist state, and they remain adhering to the window 41. Note that the center's vicinity 46 includes not only the center of the window 41, but also its surroundings.

In the present embodiment, therefore, the housing 31 is provided with a jetting means 6 that jets a gas toward the outer surface of the window 41. In the present embodiment, the jetting means 6 is configured to jet the air supplied to the housing 31 by the supplying means 34. Specifically, the jetting means 6 includes a communication pipe 61 that communicates with the inside of the housing 31 and a nozzle 62 that is provided on the communication pipe 61, and a tip portion 63 of the nozzle 62 is configured to face the center's vicinity 46 of the window 41. In the present embodiment, the tip portion 63 of the nozzle 62 is formed to have an inner diameter smaller than the base portion of the nozzle 62, and the air is supplied from the supplying means 34 into the housing 31 to create a positive pressure inside the housing 31; therefore, the air is jetted from the tip portion 63 of the nozzle 62 at a jetting speed that allows the water droplets and the like adhering to the window 41 to be removed. The communication pipe 61 may be configured to have a compression means that can compress and discharge the air to forcefully jet the air from the tip of the nozzle 62.

By having such a jetting means 6, the camera unit 1 of the present embodiment can remove water droplets, oil droplets, and dirt adhering to the window 41 so that the air supplied into the inside of the housing 31 by the supplying means 34 passes through the communication pipe 61 and the nozzle 62 and is jetted from the jet orifice of the tip portion 63 toward the center's vicinity of the window 41. In particular, in the present embodiment, the shape and position of the tip portion 63 of the nozzle 62 are set so that the air discharged from the tip portion 63 hits the rotational center's vicinity 46 of the window 41 in its center. The centrifugal force is greater toward the peripheral edge portion of the window 41 and the water droplets and oil droplets tend to scatter, but the rotational center's vicinity 46 of the window 41 in its center is in a state in which the centrifugal force is small and the water droplets and oil droplets are less likely to scatter; therefore, by the air hitting the rotational center's vicinity 46, it is possible to more efficiently remove the water droplets, oil droplets, dirt, etc., adhering to the window 41. Moreover, in the present embodiment, the jetting means 6 is configured to extract the air supplied into the housing 31 by the supplying means 34, so that the jetting means 6 can be configured without newly adding a separate supplying means.

The jetting by the jetting means 6 may be performed, for example, at regular intervals (pulses), or may also be performed continuously. The concept of the fluid in the present invention encompasses liquids and gases. In the present embodiment, the tip portion 63 is configured to have a shape thinner than the base portion side of the nozzle 62, but is not limited to this. For example, the tip portion 63 may have the same inner diameter as that of the nozzle 62, or may also have a shape with a larger inner diameter than that of the nozzle 62. The tip portion 63 may be branched into multiple parts to provide multiple jet orifices, or one tip portion 63 may have multiple jet orifices.

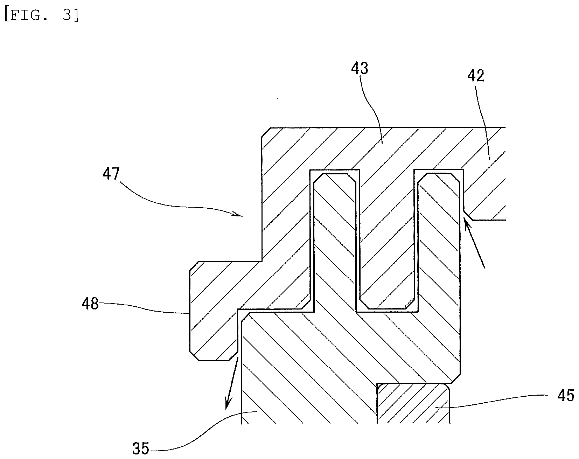

In the camera unit 1 of the present embodiment, air is supplied to the inside of the housing 31 by the supplying means 34, thus creating a positive pressure in the housing 31 and preventing water and the like from entering the housing 31, but in addition to this, as illustrated in FIG. 3, an engagement portion 47 between the upper end portion 35 of the housing 31 and the circumferential end portion 43 of the window frame 42 is configured to have a labyrinth structure. Specifically, the end portion of the upper end portion 35 is formed with multiple branches (two in the present embodiment) while the circumferential end portion 43 also has multiple branches (two in the present embodiment) formed along the branches of the upper end portion 35, and these are fitted together to form a labyrinth structure at the engagement portion 47. This can further prevent water, oil, etc. from entering the housing 31 without interfering with the rotation of the rotary window 4.

As described above, air is supplied into the housing 31, and the air is therefore discharged from the labyrinth structure of the engagement portion 47. Here, the air is discharged downward in FIG. 2 because the circumferential end portion 43 of the window frame 42 has a terminal portion 48 that is configured to cover the upper end portion 35. Although the amount of air discharged from the engagement portion 47 is small, it is located near the window 41, so there is a concern that the discharge of air may raise water and oil scattered in the usage environment and send them toward the window 41 side, but since the terminal portion 48 is thus configured to cover the upper end portion 35, the air can be discharged in the opposite direction to the window 41, and it is possible to prevent the water and oil scattered in the usage environment from being raised and sent toward the window 41 side.

In the camera unit 1 of the present embodiment, the housing unit 3 covers the entire lens member 22, but the waterproof camera main body 21 is disposed outside the housing unit 3. Thus, the housing unit 3 does not cover the waterproof camera main body 21, and the entire device can thereby be made compact, so it can be used in a narrow space. Moreover, the camera main body 21 can be easily replaced, the camera main body 21 and the lens member 22 can be replaced depending on the application, and the field of view can be changed depending on the application by replacing the lens with one having a different focal length. Furthermore, the surface of the window 41 may be subjected to surface treatment using a material having water-repellent or oil-repellent properties or hydrophilic or lipophilic properties, or the window 41 itself may be made of such a material. In this case, the above-described effects can be obtained even when the rotation speed of the rotary window 4 is low, which is advantageous in terms of a longer life, noise, power consumption, etc. In addition, when the surface of the window 41 is subjected to antistatic coating or coating for prevention of static charge, it is possible to prevent dirt and dust from adhering to the window 41.

The material for forming the window 41 is not particularly limited, provided that it has transparency, but considering that the camera is more likely to generate heat due to its high pixel count and that it is used for monitoring and testing in places with high ambient temperatures, the material is preferably a glass material suitable for use at high temperatures, such as heat-resistant glass, heat-absorbing glass, or heat-reflecting glass. By forming the window 41 from such a glass material, for example, when the camera unit 1 is used near a place with a high ambient temperature, it is possible to prevent heat from entering the inside of the housing unit 3 through the window 41, and to reduce the influence of heat on the lens member 22, etc. When the window 41 is made of heat-absorbing glass, the window 41 itself absorbs heat and becomes hot, but in the case of the camera unit 1 of the present embodiment, the jetting means 6 is configured to jet air onto the window 41, and therefore the camera unit 1 also has the function of cooling the window 41.

Considering that the camera unit 1 is used in places with high ambient temperatures and that the camera itself generates heat, the material for forming the housing 31 is preferably, for example, a metal. By forming the housing 31 (bottom portion 33) from metal, the housing 31 serves as a heat sink and can dissipate heat from the camera main body 21 to the outside. In addition, according to the camera unit 1 of the present embodiment, air is supplied from the supplying means 34 to the inside of the housing 31, so that the air can remove heat not only from the window 41 but also from the camera main body 21 and the housing 31, and the camera main body 21 can be effectively cooled. As a result, the temperature of electronic components of the camera main body 21 is maintained within the operating temperature range (guaranteed range), and failures due to temperature rise can be suppressed. When the camera unit 1 is used in places with high ambient temperatures, the camera main body 21 is preferably disposed inside the housing unit 3.

### (Second Embodiment)

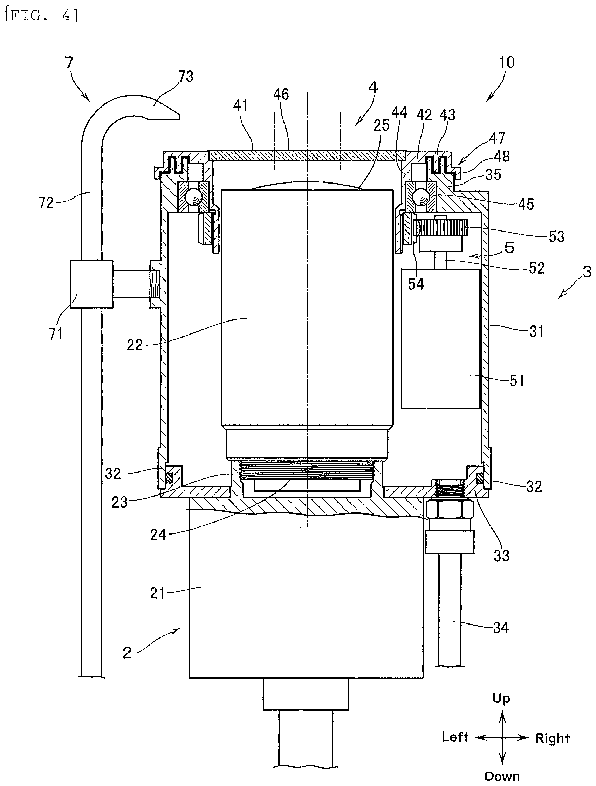

Another embodiment of the present invention will be described with reference to FIG. 4. In the present embodiment, the same components as those in the first embodiment will be described with the same reference numerals. The description of the same components as those in the first embodiment will be omitted.

In the first embodiment, the jetting means 6 jets the air supplied into the housing 31, but in the present embodiment, a jetting means 7 is configured to jet a fluid supplied from outside a camera unit 10. That is, in the present embodiment, the fluid to be jetted by the jetting means can be selected in accordance with the need. For example, the camera unit 10 of the present embodiment is in a state in which coolant is scattered in the air in its usage environment, and there is a high possibility that the coolant will adhere to the window 41; therefore, the jetting means 7 is configured to spray the same coolant as that coolant onto the window 41. Specifically, the jetting means 7 includes an inlet pipe 72 into which the coolant flows from a coolant supplying means (not illustrated), a nozzle 73 from which the coolant is jetted, and a support portion 71 to which the jetting means is fixed. Thus, the camera unit 1 is configured to jet the same liquid as that contained in the air in the usage environment, and it is thereby possible to more efficiently remove the liquid adhering to the window 41. The coolant is supplied to the inlet pipe 72 from the coolant supplying means at a constant pressure, and the tip of the nozzle 73 is configured to have a smaller inner diameter than that of the base portion of the nozzle 73, so that the coolant is jetted at a jetting speed that allows the water droplets and the like adhering to the window 41 to be removed, and there is therefore no need to provide a liquid compression means in the jetting means 7, but the inlet pipe 72 may be provided with a liquid compression means for jetting the liquid from the nozzle 73, or such a liquid compression means may be provided in the coolant supplying means (not illustrated).

In the present embodiment, the jetting means 7 is configured to supply coolant because the liquid contained in the air in the usage environment is coolant, but the present embodiment is not limited to this. If the liquid contained in the air in the usage environment is oil, it is also possible to configure the jetting means to be supplied with the same oil as that oil and jet it. In the present embodiment, air may be supplied to the jetting means 7 to jet the air.

### (Third Embodiment)

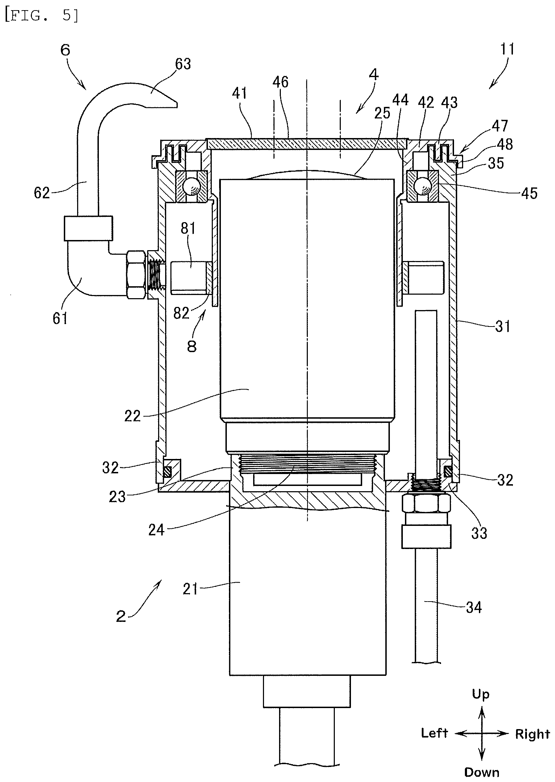

Still another embodiment of the present invention will be described with reference to FIG. 5. In the present embodiment, the same components as those in the first embodiment will be described with the same reference numerals. The description of the same components as those in the first embodiment will be omitted.

In the first embodiment, the rotary window 4 is configured to be rotated by the driving force of the motor of the driving means 5, but in the present embodiment, a driving means 8 of a camera unit 11 is configured to rotate the rotary window 4 by air supplied into the housing 31. Specifically, an annular fin unit 82 (driven means) having a plurality of fins 81 provided on its outer periphery is fixed to the outer surface of the extended portion 44 of the window frame 42 instead of the frame-side gear 54. The fin unit 82 is provided with a structure in which the fins 81 are radial and are uniformly inclined with respect to the axis of the annular fin unit 82, or a streamlined structure. The air supplied from the supplying means 34 hits the fins 81 of the fin unit 82 to rotate it, and the rotary window 4 thereby rotates with the fin unit 82. With such a configuration, there is no need to provide a motor in the present embodiment, and it is possible to suppress the production cost and save space in the housing 31.

### (Fourth Embodiment)

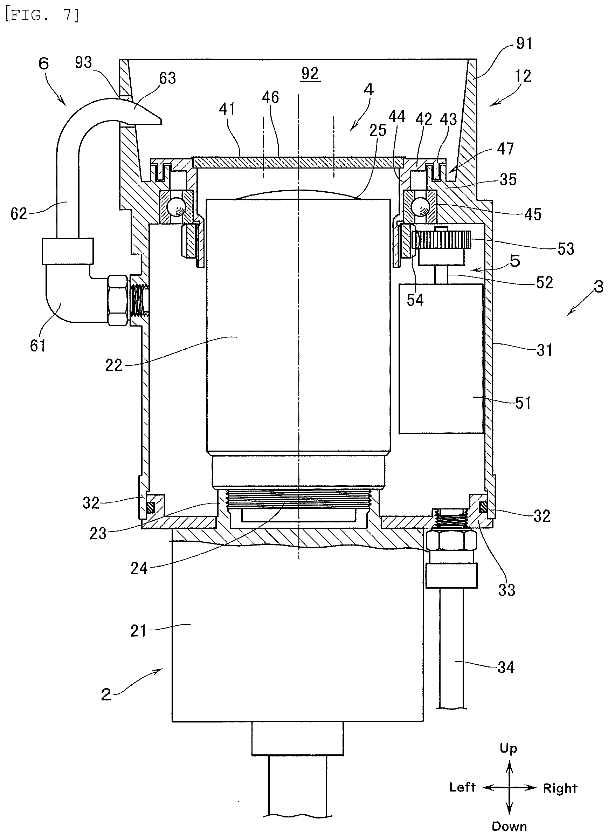

Yet another embodiment of the present invention will be described with reference to FIG. 7. In the present embodiment, the same components as those in the first embodiment will be described with the same reference numerals. The description of the same components as those in the first embodiment will be omitted.

In a camera unit 12 of the present embodiment, the housing 31 is provided with a wall portion 91 that extends from the upper end portion 35 of the housing 31 toward the opposite side of the housing 31 (i.e., toward the upper side in FIG. 7). The wall portion 91 is circumferential in the top view, and is formed at a position spaced apart from the window frame 42. This wall portion 91 and the rotary window 4 (window 41 and window frame 42) form a space 92 with an open upper portion above the rotary window 4 in FIG. 7.

In the first embodiment, the circumferential end portion 43 of the window frame 42 is configured with the terminal portion 48 such that it covers the upper end portion 35 of the housing 31, but in the camera unit 12 of the present embodiment, the circumferential end portion 43 of the window frame 42 is not configured to cover the upper end portion 35, and the circumferential end portion 43 is configured to be approximately flush with the side surface of the upper end portion 35. Therefore, air that passes through the engagement portion 47 between the upper end portion 35 of the housing 31 and the circumferential end portion 43 of the window frame 42 is discharged to the side of the housing 31 and flows into the space 92.

Furthermore, in the present embodiment, the wall portion 91 is provided with a through hole 93. The nozzle 62 of the jetting means 6 is inserted into this through hole 93, and the tip portion of the nozzle 62 is disposed in the space 92. The jetting means 6 jets air into the space 92 using the nozzle 62 that penetrates the wall portion 91. By discharging air into the space 92 in this way, the space 92 is open but has a positive pressure. That is, in the present embodiment, the positive pressure generating means is composed of the jetting means 6 and the blowing of air from the labyrinth structure.

In the present embodiment, these components of the positive pressure generating means form a positive pressure space in the space 92 in front of the window 41 of the rotary window 4, and it is thereby possible to prevent relatively small water droplets, oil droplets, etc. from adhering to the window. Such relatively small water droplets, oil droplets, etc. may not be removed by the centrifugal force caused by the rotation of the rotary window 4, but by forming such a space 92, it is possible to prevent relatively small water droplets, oil droplets, etc. from adhering to the window 41 while removing large water droplets, oil droplets, and dirt by the centrifugal force caused by the rotation of the rotary window 4. Furthermore, even if water droplets, oil droplets, etc. adhere to the center of the window 41, they can be removed by the jetting of air from the jetting means 6, and a clearer field of view from the window 41 can be ensured as a whole.

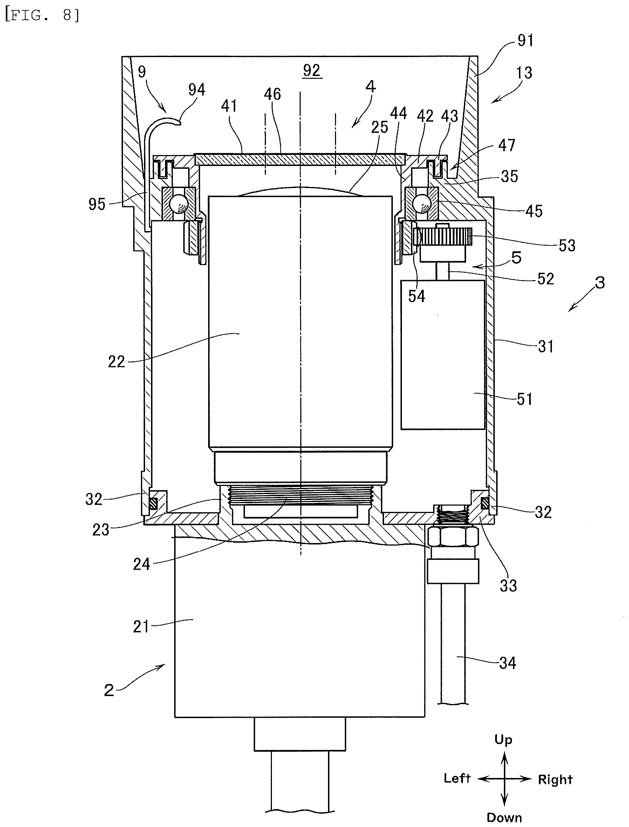

In the present embodiment, the jetting means 6 is located outside the wall portion 91, and the tip portion 63 side of the nozzle 62 is configured to be disposed in the space 92 formed by the wall portion 91 via the through hole 93 of the wall portion 91, but the present embodiment is not limited to this. For example, as in the modified example of a camera unit 13 illustrated in FIG. 8, a jetting means 9 may be provided inside the wall portion 91.

In this modified example, the jetting means 9 is composed of a nozzle portion 94 provided so as to protrude from the upper end portion 35 of the housing 31, and a communication path 95 that is provided inside the housing 31 and communicates with the nozzle portion 94. The communication path 95 opens at the upper end portion 35 and inner side surface of the housing 31, so that the air supplied into the housing 31 is jetted by the jetting means 9 into the space 92, making the space 92 a positive pressure, and can be blown onto the outer surface of the window 41 to remove water droplets and the like adhering to the rotary window 4. Thus, also in this modified example, the jetting means 9 utilizes the air supplied into the housing 31, and there is therefore no need to provide a separate air supplying means. In the camera unit 13 of this other embodiment, the amount of air jetted is less than that in the case of the camera unit 12 described in the fourth embodiment, but the above-described effects can be obtained, provided that the space 92 can be made a positive pressure.

The camera unit 11 described in the third embodiment may be configured to have the wall portion 91 as in the present embodiment to prevent relatively small water droplets, oil droplets, etc. from adhering to the window 41, thereby ensuring a clearer field of view from the window 41 as a whole. In the above-described fourth embodiment and its modified example, the jetting means 6, 9 and the blowing of air from the labyrinth structure serve as the positive pressure generating means, but they are not limited to this, and only either one may be provided.

While the embodiments of the present invention have been described above, the present invention is not limited to each of the above-described embodiments. For example, the driving means 5, 8 and the driven means are exemplified in the first and third embodiments, but any form may be used, provided that the rotary window 4 can be rotated without providing a rotating shaft at the center of the window 41 of the rotary window 4. Furthermore, the rotary window 4 may be provided with a wiper. By providing the wiper, water droplets and the like adhering to the window 41 can be efficiently removed. In this case, in order to suppress deterioration of the wiper, the wiper may be configured to have a small gap between the wiper and the outer surface of the window 41 so as not to come into contact with the outer surface, and it is preferred to remove water droplets larger than this gap when they adhere to the window.

In addition, a mesh portion that covers the rotary window 4 may be provided. By providing the mesh portion, it is possible to prevent powder and granular materials or the like from adhering to the window. In this case, if the mesh portion is fixed to the window frame 42 of the rotary window 4, the mesh portion also rotates with the rotation of the rotary window 4, and there is therefore no problem with the field of view of the camera 2.

Furthermore, in the third embodiment, the rotary window 4 having the fin unit 82 is configured to be rotated by the air supplied into the housing 31, but when the camera unit is attached to a vehicle such as a train or automobile, the airflow generated by moving the vehicle may rotate the rotary window. In this case, the airflow also hits the outer surface of the window, and there is therefore no need to provide a jetting means. In other words, moving the vehicle is both the driving means and jetting means in the present invention.

In each of the above-described embodiments, only one camera main body 21 is provided, but multiple camera main bodies 21 may be provided, and in each of the above-described embodiments, only one jetting means 6, 7, 9 is provided, but each embodiment is not limited to this and multiple jetting means may be provided.

In the above-described first, second, and fourth embodiments, the configuration of the drive means or the like is not particularly limited, provided that it can rotate the rotary window 4, and for example, a belt and pulley may be used as a power transmission means that transmits the rotation of the motor 51. In this case, a motor-side pulley may be disposed on the rotating shaft of the motor 51 while a frame-side pulley may be disposed on the window frame 42, and these may be connected via a belt. This allows the rotation of the motor 51 to be transmitted as power to the window frame 42 via these pulleys, and the rotary window 4 can be rotated.

It should be appreciated that the embodiments and their modifications heretofore explained are described to facilitate understanding of the present invention and are not described to limit the present invention. It is therefore intended that the elements disclosed in the above embodiments and their modifications include all design changes and equivalents to fall within the technical scope of the present invention.

### Description of Reference Numbers

1, 10, 11, 12, 13 Camera unit
2 Camera
3 Housing unit
4 Rotary window
5, 8 Driving means
6, 7, 9 Jetting means
21 Camera main body
22 Lens member
31 Housing
32 Lower end portion
33 Bottom portion
34 Supplying means
35 Upper end portion
41 Window
42 Window frame
43 Circumferential end portion
44 Extended portion
45 Bearing
46 Center's vicinity
47 Engagement portion
48 Terminal portion
51 Motor
52 Rotating shaft
53 Motor-side gear
54 Frame-side gear
61 Communication pipe
62 Nozzle
63 Tip portion

## Claims

1. A housing unit comprising:
a hollow housing; and
a rotary window disposed at an opening of the housing, the rotary window comprising:
a window having light transmissivity;
a window frame that supports the window at its peripheral edge portion; and
a driven means provided on an outer periphery of the window frame,
the housing unit further comprising:
a driving means that drives the driven means to rotate the window frame, thereby rotating the rotary window; and
a jetting means that jets a fluid toward an outer surface of the window.

2. The housing unit according to claim 1, further comprising a supplying means that supplies a gas into the housing,
wherein the jetting means is configured to jet the gas supplied by the supplying means toward the outer surface of the window.

3. The housing unit according to claim 1, wherein
the jetting means jets the fluid toward a center's vicinity of the outer surface of the rotary window.

4. The housing unit according to claim 1, wherein
the driving means comprises a motor and a motor-side gear provided on a rotating shaft of the motor,
the driven means comprises a frame-side gear provided around the outer periphery of the window frame of the rotary window, and
the frame-side gear is rotated by rotating the motor-side gear with driving force of the motor.

5. The housing unit according to claim 1, wherein
the driving means comprises a motor and a motor-side pulley and a belt provided on a rotating shaft of the motor,
the driven means comprises a frame-side pulley provided around the outer periphery of the window frame of the rotary window, and
the frame-side pulley is rotated by rotating the motor-side pulley and the belt with driving force of the motor.

6. The housing unit according to claim 1, wherein
the driving means comprises a supplying means that supplies a gas into the housing, and
the driven means comprises a fin provided on the outer periphery of the window frame so as to face a feeding direction of the gas.

7. The housing unit according to claim 1, further comprising
a supplying means that supplies a gas into the housing,
wherein the window frame has a labyrinth structure at an engagement portion with the housing, and the gas discharged from the labyrinth structure is discharged in an opposite direction to the window.

8. The housing unit according to claim 1, wherein the rotary window is provided with a wiper.

9. The housing unit according to claim 1, wherein a mesh portion that covers the rotary window is provided.

10. The housing unit according to claim 1, wherein the jetting means is configured to jet a same liquid as that contained in the air in a usage environment.

11. The housing unit according to claim 1, wherein the housing includes a wall portion provided around the outer periphery of the rotary window, a space defined by the wall portion and the rotary window is formed in front of the window, and a positive pressure generating means is provided so as to make the space a positive pressure.

12. The housing unit according to claim 11, wherein the positive pressure generating means is the jetting means.

13. The housing unit according to claim 11, further comprising
a supplying means that supplies a gas into the housing, wherein the window frame has a labyrinth structure at an engagement portion with the housing, and
the positive pressure generating means is configured such that the gas discharged from the labyrinth structure is discharged into the space.

14. A camera unit comprising:
a hollow housing;
a rotary window disposed at an opening of the housing; and
a camera disposed at a central portion in the housing so that a lens of the camera faces the rotary window, the rotary window comprising:
a window having transmissivity;
a window frame that supports the window at its peripheral edge portion; and
a driven means provided on an outer periphery of the window frame,
the camera unit further comprising:
a driving means that drives the driven means to rotate the window frame, thereby rotating the rotary window; and
a jetting means that jets a fluid toward an outer surface of the window.

15. The camera unit according to claim 14, wherein the housing covers only a part of the camera.
